(19) Europäisches Patentamt
European Patent Office
Office européen des brevets

(11) **EP 3 178 862 B1**

(12) **EUROPÄISCHE PATENTSCHRIFT**

(45) Veröffentlichungstag und Bekanntmachung des Hinweises auf die Patenterteilung:
**14.08.2019 Patentblatt 2019/33**

(51) Int Cl.:
**C08G 59/50** (2006.01)   **C08G 59/56** (2006.01)
**C08J 5/04** (2006.01)   **C08G 59/68** (2006.01)

(21) Anmeldenummer: **15199600.6**

(22) Anmeldetag: **11.12.2015**

(54) **LATENTE EPOXIDHARZFORMULIERUNGEN FÜR FLÜSSIGIMPRÄGNIERPROZESSE ZUR HERSTELLUNG VON FASERVERSTÄRKTEN COMPOSITES**

LATENT EPOXY RESIN FORMULATIONS FOR LIQUID IMPREGNATION PROCESSES FOR THE MANUFACTURE OF FIBER REINFORCED COMPOSITES

FORMULES DE RESINES EPOXYDES LATENTES POUR PROCEDE D'IMPREGNATION DE LIQUIDE DESTINEES A LA FABRICATION DE COMPOSITES RENFORCES EN FIBRES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**14.06.2017 Patentblatt 2017/24**

(73) Patentinhaber: **Evonik Degussa GmbH**
**45128 Essen (DE)**

(72) Erfinder:
• **ORTELT, dr., Martina**
**74223 Flein (DE)**
• **LANGKABEL, Eike**
**41844 Wegberg (DE)**
• **FUCHSMANN, Dirk**
**45721 Haltern am See (DE)**
• **KOHLSTRUK, Britta**
**45966 Glabeck (DE)**
• **KARNS, Katharina**
**48249 Dülmen (DE)**

(74) Vertreter: **Evonik Patent Association**
**c/o Evonik Industries AG**
**IP Management**
**Bau 1042A/PB 15**
**Paul-Baumann-Straße 1**
**45772 Marl (DE)**

(56) Entgegenhaltungen:
**EP-A2- 0 473 905   WO-A1-2005/111135**
**WO-A1-2010/126642   WO-A1-2015/158768**
**DE-A1- 2 640 408   DE-A1- 2 640 409**
**US-A- 5 213 897**

Bemerkungen:
Die Akte enthält technische Angaben, die nach dem Eingang der Anmeldung eingereicht wurden und die nicht in dieser Patentschrift enthalten sind.

**Beschreibung**

Gegenstand der Erfindung sind Epoxid-Zusammensetzungen bestehend aus mindestens einer Harzkomponente und mindestens einer Härterkomponente, wobei die Zusammensetzung geeignet ist als duroplastische Matrix zur Herstellung von Faser-Matrix-Halbzeugen und ausgehärteten Faser-Matrix-Laminaten, sogenannten Composites.

Epoxid-Zusammensetzungen bestehend aus mindestens einem Epoxidharz und mindestens einem Härter, z.B. Amine, Anhydride, Dicyandiamid, sind seit langem bekannt und werden in Anwendungsfeldern wie z.B. Coatings, Composites oder Flooring eingesetzt.

Unter Composites werden in diesem Zusammenhang Verbundwerkstoffe aus Fasern und Kunststoffmatrix verstanden.

Im Rahmen steigender Anforderungen an eine effiziente Nutzung knapper Ressourcen rücken Leichtbaulösungen verstärkt in den Blickpunkt verschiedenster Industrien. Überall dort, wo Massen bewegt werden müssen, sind Faserverbundwerkstoffe / Composites eine interessante Option, da diese hohe spezifische Steifigkeiten und Festigkeiten bei geringem Gewicht bieten. Composites sind aus diesem Grund in der Luftfahrt seit Jahrzehnten etabliert und ohne Faserverbundwerkstoff-Technologien wären z.B. auch Rotorblätter für Windenergieanlagen nicht denkbar. Aufgrund ihres hervorragenden Eigenschaftsprofils rücken diese Werkstoffe auch verstärkt in den Fokus beim Automobilbau. In allen 3 genannten Marktsegmenten werden mechanisch hochfeste Komponenten gefordert, wie Sie durch endlosfaserverstärkte Polymerwerkstoffe erzielt werden können. Die Geometrien dieser Komponenten werden jedoch immer anspruchsvoller (z.B. nimmt die Länge der Rotorblätter von Windenergieanlagen stetig zu, um möglichst viel Windenergie "ernten" zu können), bei gleichzeitiger Forderung nach immer höherer Produktivität (z.B. kurze Zykluszeiten insbesondere in der Automobilfertigung).

Der Begriff Composites wird im Rahmen dieser Erfindung insbesondere synonym zu den Begriffen Verbundstoff, Verbund-Bauteile, Verbundwerkstoff, Faserverbundwerkstoff, Verbund-Formteile, faserverstärkte Kunststoffe oder faserverstärkte Bauteile, Prepregs, Faser-Matrix-Halbzeug, SMC (Sheet Moulding Compound) SMC-Composites (SMC-Faser-Matrix-Halbzeuge), CFK, GFK und FVK verwendet.

Verfahren zur Herstellung von Composites lassen sich in einstufige Verfahren, wie z.B. RTM (Resin Transfer Moulding), VARTM (Vacuum Assisted Resin Transfer Moulding) und mehrstufige Verfahren, wie z.B. Prepreg-Technologie, SMC (Sheet Moulding Compound) einteilen.

Der Weg über Faserhalbzeuge (z.B. mit Präpolymeren imprägnierte textile Flächengebilde auf der der Basis von Glas- oder Carbonfasern, Prepreg) in einem mehrstufigen Verfahren hat Vorteile. Insbesondere im Bereich der endlosfaserverstärkten Strukturteile bietet die Prepreg-Technologie aufgrund der hervorragenden Benetzungsgüte der Fasern durch die Harzmatrix den Zugang zu mechanisch äußerst hochwertigen Komponenten, weshalb sich die Prepreg-Technologie in der Luftfahrt bereits seit Jahren als das wichtigste Verarbeitungsverfahren zur Herstellung von Composite-Bauteilen etabliert hat. Faserhalbzeuge sind jedoch ihrem Wesen nach zweidimensionale Flächengebilde, weswegen sich ihre Anwendbarkeit auf die Herstellung eben im Wesentlichen zweidimensionaler oder dreidimensionaler Bauteile mit begrenzter geometrischer Komplexität, z.B. Tragflächen- oder Leitwerksteile beschränkt.

Demgegenüber werden endlosfaserverstärkte Composite-Bauteile mit hochkomplexen dreidimensionalen Geometrien im RTM-Verfahren hergestellt. Dieses Verfahren ist dadurch gekennzeichnet, dass aus textilen Flächengebilden zunächst sog. endkonturnahe Preforms hergestellt werden. Dabei werden nicht mit Harz imprägnierte Faserprodukte (also Gewebe, Gelege, Vliese, etc. im Anlieferungszustand) zu dreidimensionalen Gebilden endkonturnah vorgeformt und die einzelnen Lagen dabei zur Fixierung verklebt, oder bei besonders komplexen Teilen, vernäht. Diese reine Faserpreform wird dann in eine Kavität gebracht und in der geschlossenen Kavität, z.B. einem beheizten Stahlwerkzeug, mit einer lösemittelfreien Flüssigharzformulierung imprägniert und in der geschlossenen Kavität sofort bis zum Endzustand durchgehärtet (einstufiges Verfahren). Die dabei auftretenden, teilweise hoch komplizierten Fließgeometrien erfordern niedrigviskose Harze mit langen Topfzeiten, um alle Faserfilamente gut zu benetzen. Dementsprechend sind die hierfür eingesetzten Harzsysteme wenig reaktiv und erfordern lange Härtungszeiten bei hohen Temperaturen. Nach der Härtung wird das Fertigteil entformt und ggf. noch nachbearbeitet, z.B. entgratet.

Geeignete, wenig reaktive lösemittelfreie Epoxidharz-Zusammensetzungen sind anhydridisch härtende Systeme. Es lassen sich jedoch auch aminisch härtende Epoxidharz-Zusammensetzungen mit dem erwünschten rheologischen Profil formulieren. Aminisch härtende Epoxidharz-Zusammensetzungen bieten gegenüber Anhydridsystemen z.B. in Anwendungsfällen Vorteile, wo hohe Anforderungen an die Medienbeständigkeit der Bauteile gestellt werden. Wenig reaktive Polyamine, die neben den Verarbeitungsanforderungen auch übliche Anforderungen an das Eigenschaftsprofil der Fertigteile, wie hohe Wärmeformbeständigkeit und Glasübergangstemperatur sowie gute mechanische Eigenschaften, erfüllen, sind bekannt.

WO 2005/111135 A1 offenbart härtbare Zusammenfassungen enthaltend mindestens ein Epoxidharz und mindestens einen Härter ausgewählt aus d(4)-(Aminomethyl)-cyclohexan-propanamin und 2,4(5)-Cyclooctandimethanamin.

In den Dokumenten DE 2640408, DE 2640409, DE 2540410, DE 2950067 und DE 3328134 wird 2,2,6,6-Tetramethyl-4-piperidylamin (kurz Triacetondiamin oder abgekürzt TAD) als latentes Amin zur Härtung von Epoxidharzen beschrieben. Als Anwendungen kommen dort Oberflächenbeschichtungen mit Schwerpunkt auf Pulverlacken aber auch Formmassen in Frage, die ggf. durch Fasern oder andere Stoffe verstärkt werden können. Als Beispiele werden Kombinationen aus reinem TAD und Epoxidharzen aufgeführt.

Diese Systeme sind jedoch für die Anforderungen moderner, auf Effizienz ausgelegte Produktionssysteme für die Großserienfertigung, insbesondere im Automobilbau, zu unreaktiv. Neben optimierten Handlingsystemen werden Effizienzgewinne hier vor allen Dingen durch die Reduktion der Härtungszeiten erzielt.

DE 2640408 weiterhin offenbart Epoxidharz-Zusammensetzungen umfassend mindestens eine Epoxidverbindung und eine Härterzusammensetzung umfassend ein Polyamin auf Basis von Triacetondiamin und mindestens ein weiteres Polyamin.

## Aufgabe der Erfindung

Die Performance eines Composites wird neben dem Eigenschaftsbild der gewählten Harzmatrix und der Verstärkungsfaser ganz besonders auch durch die Qualität des Faser-Matrix Verbunds definiert. Eine hohe Verbundqualität setzt voraus, dass die Harzmatrix die Verstärkungsfasern fehlerlos benetzt, wobei auftretende Scherkräfte aufgrund von Injektionsdruck und Viskositätserhöhung infolge fortschreitender Reaktion und einhergehender Molekulargewichtsanstieg jedoch begrenzt bleiben müssen, um Faserverzüge ('fiber displacement') zu vermeiden. Die Faseranordnung im fertigen Bauteil wird entsprechend der zu erwartenden Lastpfade ausgelegt und jeder prozessbedingte Verzug der Fasern vom vorausdefinierten Faserverlauf, der zu deutlich spürbaren Einbußen bei der mechanischen Festigkeit führt, muss vermieden werden.

## Lösung

Überraschend wurde gefunden, dass die erfindungsgemäße Epoxidharz-Zusammensetzung in einem breiten Bereich so eingestellt werden kann, dass sie bei moderaten Werkzeugtemperaturen zwischen 100 °C und 140 °C das angestrebte Fließ-Härteverhalten zeigt. Die Formulierungen weisen bei Temperaturen zwischen 100 und 140 °C für 60 s bis 180 s eine geringe Viskosität im Bereich zwischen 50 mPas und 500 mPas auf und härten mit einem Umsatz von $\geq$ 99 % bei diesen Temperaturen in 2 bis 10 min vollständig durch, wobei Glasübergangstemperaturen von 120 °C bis 140 °C erzielt werden.

Die erfindungsgemäßen Epoxidharz-Zusammensetzungen für effiziente Flüssigimprägnierprozesse zur Herstellung hochkomplexer dreidimensionaler Bauteile, weisen die folgenden Vorteilhaften Eigenschaften auf:

- niedrig viskos
- den erforderlichen Fließwegen entsprechend lange niedrig viskos, um alle Fasern fehlerfrei zu imprägnieren
- nach Imprägnierung aller Fasern schnell durchhärtend, um kurze Zykluszeiten zu erreichen (also bevorzugt ein sog. 'SnapCure' -Profil zeigen)
- sie erfüllen alle Anforderungen an die mechanische und thermische Beständigkeit und weisen gute Oberflächeneigenschaften auf.

Gegenstand der Erfindung ist eine Epoxidharz-Zusammensetzung enthaltend:

A) mindestens eine Epoxidverbindung
und

B) eine Härterzusammensetzung bestehend aus:

B1) 20-40 Gew.-% mindestens einem Diamin und/oder Polyamin auf Basis von Triacetondiamin
und
B2) 60-80 Gew.-% mindestens eines weiteren Diamins und/oder Polyamins
ausgewählt aus
Isophorondiamin,
4,4'-Diaminodicyclohexylmethan, 2,4'-Diaminodicyclohexylmethan, 2,2'-Diaminodicyclohexylmethan, allein oder in Mischungen der Isomeren,
eine Mischung der Isomeren aus 2,2,4-Trimethylhexamethylendiamin und 2,4,4-Trimethylhexamethylendiamin, Addukthärtern auf Basis der Umsetzungsprodukte von Epoxidverbindungen und Di- und/oder Polyaminen B2) oder Kombinationen der vorgenannten Di- und/oder Polyamine B2),

wobei das stöchiometrische Verhältnis der Epoxid-Gruppen von A) und der Anzahl der aktiven Wasserstoffatome der funktionellen Gruppen von B) von 1:0,5 bis 1:1 variiert, bevorzugt 1:0,6 bis 1:0,8,

C) 0,1 bis 10 Gew.-% mindestens eines Härtungsbeschleunigers,

D) gegebenenfalls mindestens einen latenten Härter,
wobei sich die Mengen von A)-D) zu 100 Gew.-% addieren,

E) gegebenenfalls weitere Zusatzstoffe.

**Komponente A)**

Als Komponente A) sind Epoxidverbindungen geeignet. Geeignete Epoxidverbindungen werden z. B. in EP 675 185 beschrieben.

Es kommt eine Vielzahl der hierfür bekannten Verbindungen in Betracht, die mehr als eine Epoxidgruppe, vorzugsweise zwei Epoxidgruppen, pro Molekül enthalten. Diese Epoxidverbindungen können dabei sowohl gesättigt als auch ungesättigt sowie aliphatisch, cycloaliphatisch, aromatisch oder heterocyclisch sein und auch Hydroxylgruppen aufweisen. Sie können weiterhin solche Substituenten enthalten, die unter den Mischungs- oder Reaktionsbedingungen keine störenden Nebenreaktionen verursachen, beispielsweise Alkyl- oder Arylsubstituenten, Ethergruppierungen und ähnliche. Vorzugsweise handelt es sich dabei um Glycidylether, die sich von mehrwertigen Phenolen, insbesondere Bisphenolen sowie Novolaken ableiten und deren Molmassen bezogen auf die Anzahl der Epoxidgruppen ME ("Epoxidäquivalentgewichte", "EV-Wert") zwischen 100 und 1500, insbesondere jedoch zwischen 150 und 250 g/val, liegen. Als mehrwertige Phenole sind beispielsweise zu nennen: Resorcin, Hydrochinon, 2,2-Bis-(4-hydroxyphenyl)-propan (Bisphenol A), Isomerengemische des Dihydroxydiphenylmethans (Bisphenol F), 4,4'-Dihydroxydiphenylcyclohexan, 4,4'-Dihydroxy-3,3'-dimethyldiphenylpropan,4,4'-Dihydroxydiphenyl,4,4'-Dihydroxybenzophenon, Bis-(4-hydroxyphenyl)-1,1-äthan, Bis-(4-hydroxyphenyl)-1,1-isobutan, 2,2-Bis-(4-hydroxy-tert.butylphenyl)-propan, Bis-(2-hydroxynaphthyl)-methan, 1,5-Dihydroxynaphthalin, Tris-(4-hydroxyphenyl)-methan, Bis-(4-hydroxyphenyl)-ether, Bis-(4-hydroxyphenyl)-sulfon u. a. sowie die Chlorierungs- und Bromierungsprodukte der vorstehend genannten Verbindungen wie beispielsweise Tetrabrom-Bisphenol A. Ganz besonders bevorzugt, werden flüssige Diglycidylether auf Basis von Bisphenol A und Bisphenol F mit einem Epoxidäquivalentgewicht von 150 bis 200 g/val eingesetzt. Es können auch Polyglycidylether von Polyalkoholen verwendet werden, wie z. B. Ethandiol-1,2-diglycidylether, Propandiol-1,2-diglycidylether, Propandiol-1,3-diglycidylether, Butandioldiglycidylether, Pentandioldiglycidylether (auch Neopentylglykoldiglycidylether), Hexandioldiglycidylether, Diäthylenglykoldiglycidylether, Dipropylenglykoldiglycidylether, höhere Polyoxyalkylenglykoldiglycidylether, wie z. B. höhere Polyoxyäthylenglykoldiglycidylether und Polyoxypropylenglykoldiglycidylether, Mischpolyoxyäthylen-propylenglykoldiglycidylether, Polyoxytetramethylenglykoldiglycidylether, Polyglycidylether des Glycerins, des 1,2,6-Hexantriols, Trimethylolpropans, Trimethyloläthans, Pentaerythrits, Sorbitols, Polyglycidylether von oxalkylierten Polyolen (wie z. B. des Glycerins, Trimethylolpropans, Pentaerythrits u. a.), Diglydicylether des Cyclohexandimethanols, Bis-(4-hydroxycyclohexyl)methans und 2,2-Bis-(4-hydroxycyclohexyl)propans, Polyglycidylether des Rizinusöls, Triglycidyltris-(2-hydroxy-äthyl)-isocyanurat.

Weiterhin kommen als Komponente A) in Frage: Poly-(N-glycidyl) Verbindungen, die erhältlich sind durch Dehydrohalogenierung der Reaktionsprodukte von Epichlorhydrin und Aminen wie Anilin, n-Butylamin, Bis-(4-aminophenyl)methan, m-Xylylendiamin oder Bis-(4-methylaminophenyl)methan. Zu den Poly-(N-glycidyl)-Verbindungen zählen aber auch Triglycidylisocyanurat, Triglycidylurazol sowie deren Oligomere, N,N'-Diglycidylderivate von Cycloalkylenharnstoffen und Diglycidylderivate von Hydantoinen u. a.
Weiterhin können auch Polyglycidylester von Polycarbonsäuren eingesetzt werden, die man durch die Umsetzung von Epichlorhydrin oder ähnlichen Epoxyverbindungen mit einer aliphatischen, cycloaliphatischen oder aromatischen Polycarbonsäure, wie Oxalsäure, Bernsteinsäure, Adipinsäure, Glutarsäure, Phthalsäure, Terephthalsäure, Tetrahydrophthalsäure, Hexahydrophthalsäure, 2,6-Naphthalindicarbonsäure und höhere Dicarbonsäurediglycidylester, wie z. B. dimerisierte bzw. trimerisierte Linolensäure, erhält. Beispiele sind Adipinsäurediglycidylester, Phthalsäurediglycidylester und Hexahydrophthalsäurediglycidylester.

Weiterhin seien genannt Glycidylester ungesättigter Carbonsäuren und epoxidierte Ester von ungesättigten Alkoholen bzw. ungesättigten Carbonsäuren. Zusätzlich zu den Polyglycidylethern können geringe Mengen von Monoepoxiden wie z. B. Methylglycidylether, Butylglycidylether, Allylglycidylether, Äthylhexylglycidylether, langkettige aliphatische Glycidylether, wie z. B. Cetylglycidylether und Stearylglycidylether, Monoglycidylether eines höheren isomeren Alkoholgemisches, Glycidylether einer Mischung von C12 bis C13 Alkoholen, Phenylglycidylether, Kresylglycidylether, p-t-Butylphenylglycidylethers, p-Octylphenylglycidylether, p-Phenylphenylglycidylether, Glycidylether eines oxalkylierten Laurylalkohols sowie Monoepoxide wie beispielsweise epoxidierte einfach ungesättigte Kohlenwasserstoffe (Butylen-, Cyclohexen-, Styroloxid) in Massenanteilen bis zu 30 Gew.-%, vorzugsweise 10 bis 20 Gew.-%, bezogen auf die Masse der Polyglycidylether mitverwendet werden
Eine ausführliche Aufzählung der geeigneten Epoxyverbindungen findet sich in dem Handbuch "Epoxidverbindungen und Epoxidharze" von A. M. Paquin, Springer Verlag, Berlin 1958, Kapitel IV, und in Lee Neville "Handbook of Epoxy Resins", 1967, Chapter 2.

Als Epoxyverbindungen kommen dabei <u>bevorzugt</u> Glycidylether und Glycidylester, aliphatische Epoxide, Diglycidylether auf Basis Bisphenol A und / oder Bisphenol F und Glycidylmethacrylate in Frage. Beispiele für solche Epoxide sind auch Triglycidylisocyanurat (TGIC, Handelsname ARALDIT 810, Huntsman), Gemische aus Terephthalsäurediglycidylester und Trimelitsäuretriglycidylester (Handelsname ARALDIT PT 910 und 912, Huntsman), Glycidylester der Versaticsäure (Handelsname CARDURA E10, Shell), 3,4-Epoxycyclohexylmethyl-3',4'-epoxycyclohexancarboxylat (ECC), Ethylhexylglycidylether, Butylglycidylether, Pentaerythrittetraglycidylether, (Handelsname POLYPOX R 16, UPPC AG) sowie andere Polypoxtypen mit freien Epoxygruppen.

Es können auch Mischungen der genannten Epoxyverbindungen eingesetzt werden.

Als Epoxykomponente werden besonders bevorzugt Polyepoxide auf Basis von Bisphenol A-diglycidylether, Bisphenol F-diglycidylether, 4,4'-Methylen-bis[N,N-bis(2,3-epoxypropyl)anilin], Hexandioldiglycidylether, Butandioldiglycidylether, Trimethylolpropantriglycidylether, 1,2,3-Propantrioltriglycidylether, Pentaerythrit-tetraglycidylether und Hexahydrophthalsäurediglycidylester.

Erfindungsgemäß können bevorzugt auch Mischungen dieser Epoxyverbindungen als Komponente A) eingesetzt werden.

Die Menge der Komponente A) richtet sich nach der Zusammensetzung der Komponente B) und wird so berechnet, dass das stöchiometrische Verhältnis der Epoxid-Gruppen von A) und der Anzahl der aktiven Wasserstoffatome der funktionellen Gruppen von B) 1:0,5 bis 1:1, bevorzugt 1:0,6 bis 1:0,8,variiert. Das bedeutet, dass pro Wasserstoffatom der Aminogruppe aus B) eine Epoxidgruppe aus A) zur Reaktion kommt.

## Komponente B1)

Polyamine auf Basis von Triacetondiamin B1) sind der Literatur generell bekannt. Als Komponente B1) werden bevorzugt die folgenden Amine auf Basis von Triacetondiamin eingesetzt: 2,2,6,6-Tetramethyl-4-amino-piperidin (TAD), Hexamethylen-Bis-(4-Amino-2,2,6,6-tetramethylpiperidin), N-Butyl-4-Amino-2,2,6,6-tetramethylpiperidin, N,N-Dimethylaminopropyl-4-Amino-2,2,6,6-tetramethylpiperidin, N-Propyl-4-Amino-2,2,6,6-tetramethylpiperidin, N-Isopropyl-4-Amino-2,2,6,6-tetramethylpiperidin, N-Hydroxyethyl-4-Amino-2,2,6,6-tetramethylpiperidin, N-Methoxyethyl-4-Amino-2,2,6,6-tetramethylpiperidin, N-Methoxyethyl-4-Amino-2,2,6,6-tetramethylpiperidin, N',N'-Dimethylaminoethyl-4-Amino-2,2,6,6-tetramethylpiperidin, N-Morpholinoethyl-4-Amino-2,2,6,6-tetramethylpiperidin, N-Piperazinoethyl-4-Amino-2,2,6,6-tetramethylpiperidin, 4-Morpholino-2,2,6,6-tetramethylpiperidin.

Es können auch Mischungen der vorab genannten Amine auf Basis von Triacetondiamin B1) eingesetzt werden.

Bevorzugt werden 2,2,6,6-Tetramethyl-4-amino-piperidin (TAD) und/oder Hexamethylen-Bis-(4-Amino-2,2,6,6-tetramethylpiperidin) eingesetzt.

Die eingesetzte Menge der Komponente B1) beträgt allgemein 20-40 Gew.-%, bevorzugt 25-35 Gew.-%, besonders bevorzugt 28-32 Gew.-%, bezogen auf die Gesamtmenge aus B1) und B2).

## Komponente B2)

Als Verbindungen B2) sind prinzipiell solche Diamine und Polyamine geeignet, die mindestens 2 Aminogruppen enthalten. Diamine und Polyamine können auch in Mischungen mit latenten Aminen, Aminoalkoholen oder Polymercaptanen eingesetzt werden.

Di- oder Polyamine B2) sind in der Literatur bekannt. Diese können monomere, oligomere und/oder polymere Verbindungen sein. Monomere und oligomere Verbindungen sind bevorzugt ausgewählt aus der Gruppe Diamine, Triamine, Tetramine. Die Amingruppe der Di- oder Polyamine B2) kann an einem primären, sekundären oder tertiären Kohlenstoffatom angebunden sein, bevorzugt an einem primären oder sekundären Kohlenstoffatom. Es können auch Mischungen von Di- und/oder Polyamine als Komponente B2) eingesetzt werden.

Eingesetzt werden Diamine als Komponente B2) ausgewählt aus Isophorondiamin (3,5,5-Trimethyl-3-aminomethyl-cyclohexylamin, IPD), 4,4'-Diaminodicyclohexylmethan, 2,4'-Diaminodicyclohexylmethan, 2,2'-Diaminodicyclohexylmethan (auch als PACM bezeichnet), allein oder in Mischungen der Isomeren, eine Mischung der Isomeren aus 2,2,4-Trimethylhexamethylendiamin und 2,4,4-Trimethylhexamethylendiamin (TMD), Adukthärter auf Basis der Umsetzungsprodukte von Epoxidverbindungen und den vorgenannten Aminen B2) oder Kombination von vorgenannten Aminen B2). Es können auch Mischungen dieser Verbindungen eingesetzt werden.

Ganz besonders bevorzugt wird als Komponente B2)

a) Isophorondiamin (3,5,5-Trimethyl-3-aminomethyl-cyclohexylamin, IPD),
b) und/oder eine Kombination aus Isophorondiamin und einer Mischung der Isomeren aus 2,2,4-Trimethylhexamethylendiamin und 2,4,4-Trimethylhexamethylendiamin (TMD), und/oder 4,4'-Diaminodicyclohexylmethan, 2,4'-Diaminodicyclohexylmethan, 2,2'-Diaminodicyclohexylmethan (auch als PACM bezeichnet), allein oder in Mischungen der Isomeren,

c) und/oder Addukthärter auf Basis der Umsetzungsprodukte von Epoxidverbindungen und den vorgenannten Aminen B2) oder Kombination von vorgenannten Aminen B2)

eingesetzt.

Erfindungsgemäß können Aminoalkohole als weitere Komponente zu den Diaminen und Polyaminen in Mischungen in der Komponente B2) eingesetzt werden. Als Aminoalkohole seien beispielhaft Monoethanolamin, 3-Amino-1-propanol, Isopropanolamin, Aminoethoxyethanol, N-(2-Aminoethyl)ethanolamin, N-Ethylethanolamin, N-Butylethanolamin, Diethanolamin, 3-(Hydroxyethylamino)-1-propanol Isophoronaminoalkohol und Diisopropanolamin genannt. Aminoalkohole können allein oder als Mischungen mehrerer Aminoalkohole zusammen mit Di- und Polyaminen als Komponente B2) eingesetzt werden.

Erfindungsgemäß können Polymercaptane als weitere Komponente zu den Diaminen und Polyaminen in Mischungen in der Komponente B2) eingesetzt werden. Als Mercaptane, auch Thiole genannt, seien bspw. Ethanthiol, Dithiothreitol, Dithioerythritol, Glyceryldithioglykolat, Glykoldimercaptoacetat, Trimethylolpropantrimercaptoacetat, Pentaerythritoltetramercaptoacetate, Glykoldi(3-mercaptopropionat), Trimethylolpropantri(3-mercaptopropionat), Pentaerythritoltetra(3-mercaptopropionat), Dipentaerythritolhexa(3-mercaptopropionat), Ethoxyliertes-Trimethylolpropantri(3-mercaptopropionat) (Produktname: Thiocure ETTMP 1300), Tris[2-(3-mercaptopropionyloxy)ethyl]isocyanurat genannt. Weitere Mercaptane werden bspw. in EP394495A1, US4775733A1 und WO2007096425A2 beschrieben. Mercaptane können allein oder als Mischungen mehrerer Mercaptane zusammen mit Di- und Polyaminen als Komponente B2) eingesetzt werden.

Zusätzlich zu den genannten Di- und Polyaminen können die Di- und Polyamine zusammen mit Polyphenolen als Komponente B2) eingesetzt werden. Beispiele dafür werden in "Epoxy Resins - Chemistry and Technology; Curing Agents and Modifiers; S. 481-482, 2. Ausgabe 1988" genannt. Polyphenole können allein oder als Mischungen mehrerer Polyphenole zusammen mit Di- und Polyaminen als Komponente B2) eingesetzt werden.

Die eingesetzte Menge der Komponente B2) beträgt allgemein 60-80 Gew.-%, bevorzugt 65 bis 75 Gew.-%, besonders bevorzugt 68-72 Gew.-%, bezogen auf die Gesamtmenge aus B1) und B2).

## Komponente C) Härtungsbeschleuniger

Weiterhin sind Härtungsbeschleuniger als Komponente C) enthalten und werden als Katalysatoren für die Epoxy-Amin-Reaktion zugegeben. Geeignete Beschleuniger sind beschrieben in: H. Lee and K. Neville, Handbook of Epoxy Resins, McGraw-Hill, New York, 1967. Erfindungsgemäß werden 0,1 bis 10 Gew.-%, bevorzugt 0,1 bis 5 Gew.-%, besonders bevorzugt 0,5 bis 2,0 Gew.-%, bezogen auf die Gesamtmenge der Komponenten, mindestens eines Härtungsbeschleunigers eingesetzt.

Beispiele für geeignete Beschleuniger sind organische Säuren wie Salicylsäure, Dihydroxybenzoesäure, Trihydroxybenzoesäure, Methylsalicylsäure, 2-Hydroxy-3-isopropyl-benzoesäure oder Hydroxynaphthoesäuren, Milchsäure und Glycolsäure, tertiäre Amine wie Benzyldimethylamin (BDMA), 1,4-Diazabicyclo[2,2,2]octan (DABCO), Triethylamin, N,N'-Dimethylpiperazin oder Aminoethylpiperazin (AEP), Hydroxylamine wie Dimethylaminomethylphenol, Bis(dimethylaminomethyl)phenol, 2,4,6-Tris(dimethylaminomethyl)phenol (Ancamine K54), Urone wie 3-(4-Chlorphenyl)-1,1-dimethylharnstoff (Monuron), 3-(3,4-Dichlorphenyl)-1,1-dimethyl-harnstoff (Diuron), 3-Phenyl-1,1-dimethylharnstoff (Fenuron), 3-(3-Chlor-4-methylphenyl)-1,1-dimethyl-harnstoff (Chlortoluron), Tetraalkylguanidine wie N,N,N',N'-Tetramethylguanidin (TMG), Imidazol und -derivate wie 1H-Imidazol, 1-Methylimidazol, 2-Methylimidazol, 1-Benzyl-2-methylimidazol, 2-Ethyl-4-methylimidazol, 2-Phenylimidazol, 2-Phenyl-4-methylimidazol, 1-Vinylimidazol, 1-(2-Hydroxyethyl)imidazol, 1,2-Dimethylimidazol, 1-Cyanoethylimidazol und deren geeignete Salze, Phenol und -derivate wie t-Butylphenol, Nonylphenol, Bisphenol-A oder Bisphenol-F sowie organische oder anorganische Salze und Komplexverbindungen wie Methyltriphenylphosphoniumbromid, Calciumnitrat (Accelerator 3130), oder Mg-, Ca-, Zn- und Sn-Carboxylate, -sulfonate, -phosphonate, -sulfate, - tetrafluoroborate, oder-nitrate. Besonders bevorzugt sind Imidazol und Imidazol-Derivate.

## Komponente D)

Zusätzlich zur Komponente B2) können latente Härter als Komponente D) eingesetzt werden. Als zusätzlicher latenter Härter kann im Prinzip jede für diesen Zweck bekannte Verbindung eingesetzt werden, d.h. jede Verbindung, welchen Epoxidharzen gegenüber unterhalb der definierten Grenztemperatur von 80 °C inert ist, die aber schnell unter Vernetzung des Harzes reagiert, sobald diese Grenztemperatur überschritten ist. Die Grenztemperatur der verwendeten latenten Härter ist vorzugsweise mindestens 85 °C, insbesondere mindestens 100 °C. Solche Verbindungen sind wohlbekannt und auch im Handel erhältlich. Prinzipiell können latente Härter, ausgewählt aus Dicyandiamid, Cyanoguanidine, aromatische Amine, Guanidinen, modifizierten Polyaminen, N-Acylimidazolen, Imidazolen, Carbonsäurehydrazide, Triazinderivate, Melamin und dessen Derivate, N-Cyanacylamid-Verbindungen, Acylthiopropylphenole, eingesetzt werden. Beispiele geeigneter latenter Härter sind Dicyandiamid, Cyanoguanidine, wie z. B. die in den US 4,859,761 oder EP-A-306 451 beschriebenen Verbindungen, aromatische Amine, wie z.B. 4,4'- oder 3,3'-Diaminodiphenylsulfon, oder Guanidine, wie z. B. 1-o-Tolylbiguanid, oder modifizierte Polyamine, wie z. B. Ancamine TM 2014 S (Anchor Chemical UK Limited, Manchester).

Geeignete latente Härter sind auch N-Acylimidazole, wie z.B. 1-(2,4,6-Trimethylbenzoyl)-2-phenylimidazol oder 1-Benzoyl-2-isopropylimidazol. Solche Verbindungen sind beispielsweise in den US 4,436,892, US 4,587,311 oder der JP-PS 743,212 beschrieben.

Weitere geeignete Härter sind Metallsalzkomplexe von Imidazolen, wie z. B. in der US 3,678,007 oder US 3,677,978 beschrieben, Carbonsäurehydrazide, wie z. B. Adipinsäuredihydrazid, Isophthalsäuredihydrazid oder Anthranilsäurehydrazid, Triazinderivate, wie z. B. 2-Phenyl-4,6-diamino-s-triazin (Benzoguanamin) oder 2-Lauryl-4,6-diamino-s-triazin (Lauroguanamin) sowie Melamin und dessen Derivate. Die letztgenannten Verbindungen sind z. B. in der US 3,030,247 beschrieben.

Als latente Härter geeignet sind auch Cyanacetylverbindungen, wie z. B. in der US 4,283,520 beschrieben, beispielsweise Neopentylglykolbiscyanessigester, Cyanessigsäure-N-isobutylamid, 1,6-Hexamethylen-bis-cyanacetat oder 1,4-Cyclohexandimethanol-bis-cyanacetat.

Geeignete latente Härter sind auch N-Cyanacylamid-Verbindungen wie z. B. N,N'-Dicyanadipinsäurediamid. Solche Verbindungen sind z. B. in den US 4,529,821, US 4,550,203 und US 4,618,712 beschrieben.

Weitere geeignete latente Härter sind die in der US 4,694,096 beschriebenen Acylthiopropylphenole und die in der US 3,386,955 offenbarten Harnstoffderivate wie beispielsweise Toluol-2,4-bis(N,N-dimethylcarbamid).

Bevorzugte latente Härter sind 4,4'-Diaminodiphenylsulfon und Dicyandiamid.

Die Komponente D) kann in Mengen von 1-30 Gew.-%, bevorzugt 3-25 Gew.-% und besonders bevorzugt in Mengen von 5-20 Gew.-%, bezogen auf die Summe der Komponenten B1), B2) und D), eingesetzt werden.

Falls ein latenter Härter zusätzlich zu Komponente B2) eingesetzt wird, wird Komponente A) in solchen Mengen gewählt, dass das Verhältnis der Epoxid-Gruppen von A) und der Summe der funktionellen Gruppen von B) und D) 1:0,5 bis 1:1, bevorzugt 1:0,6 bis 1:0,8, beträgt.

## Komponente E) Zusatzstoffe

Die erfindungsgemäße Zusammensetzung kann gegebenenfalls Zusatzstoffe enthalten. Unter Zusatzstoffen werden Stoffe verstanden, die in der Regel zugesetzt werden, um die Eigenschaften der Epoxidzusammensetzung in gewünschter Richtung zu verändern, z. B. Viskosität, Benetzungsverhalten, Stabilität, Reaktionsgeschwindigkeit, Blasenbildung, Lagerfähigkeit oder Haftung, und auch Gebrauchseigenschaften dem Anwendungszweck anzupassen. Geeignete Zusatzstoffe werden z.B. in WO 99/55772, S. 15-25, und in "Plastics Additives; R. Gächter und H. Müller, Hanser Publishers 1983" beschrieben. Diese können der Komponente A) oder B) zugegeben werden.

So können beispielsweise Lichtschutzmittel wie z. B. sterisch gehinderte Amine, oder andere Hilfsmittel, wie sie z. B. in EP 669 353 beschrieben wurden, in einer Gesamtmenge von 0,05 bis 5 Gew.-% zugesetzt werden.

Für die Herstellung der erfindungsgemäßen reaktiven Zusammensetzungen können darüber hinaus Zusatzstoffe wie Verlaufsmittel, z. B. Polysilicone oder Haftvermittler, z.B. auf Acrylatbasis, zugesetzt werden. Zusätzlich können noch weitere Komponenten optional enthalten sein.

Als Hilfs- und Zusatzstoffe können zusätzlich Regler, Weichmacher, Stabilisatoren und/oder Inhibitoren eingesetzt werden.

Darüber hinaus können Farbstoffe, nanoskalige Füllstoffe, Toughener (Zähigkeitsverbesserer), Trennmittel, Flammschutzmittel, Pigmente, Trockenmittel, Netz-, Dispergier- und Verlaufshilfsmittel, Haftvermittler, UV-Stabilisatoren, Entschäumer und Rheologieadditive zugesetzt werden.

Gegenstand der Erfindung ist auch die Verwendung einer Epoxidharz-Zusammensetzung enthaltend:

A) mindestens eine Epoxidverbindung
und

B) eine Härterzusammensetzung bestehend aus:

B1) 20-40 Gew.-% mindestens einem Diamin und/oder Polyamin auf Basis von Triacetondiamin
und

B2) 60-80 Gew.-% mindestens eines weiteren Diamins und/oder Polyamins ausgewählt aus Isophorondiamin, 4,4'-Diaminodicyclohexylmethan, 2,4'-Diaminodicyclohexylmethan, 2,2'-Diaminodicyclohexylmethan, allein oder in Mischungen der Isomeren,

eine Mischung der Isomeren aus 2,2,4-Trimethylhexamethylendiamin und 2,4,4-Trimethylhexamethylendiamin, Adukthärtern auf Basis der Umsetzungsprodukte von Epoxidverbindungen und Di- und/oder Polyaminen B2) oder Kombinationen der vorgenannten Di- und/oder Polyamine B2),

wobei das stöchiometrische Verhältnis der Epoxid-Gruppen von A) und der Anzahl der aktiven Wasserstoffatome der funktionellen Gruppen von B) von 1:0,5 bis 1:1 variiert, bevorzugt 1:0,6 bis 1:0,8,

C) 0,1 bis 10 Gew.-% mindestens eines Härtungsbeschleunigers,

D) gegebenenfalls mindestens einen latenten Härter,
wobei sich die Mengen von A)-D) zu 100 Gew.-% addieren,

E) gegebenenfalls weitere Zusatzstoffe,

zur Herstellung von Composites.
Gegenstand der Erfindung sind auch Composite-Bauteile, im Wesentlichen aufgebaut aus

1) mindestens einem Faser förmigen Träger
und

2) einer Epoxidharz-Zusammensetzung enthaltend:

A) mindestens eine Epoxidverbindung
und

B) eine Härterzusammensetzung bestehend aus:

B1) 20-40 Gew.-% mindestens einem Diamin und/oder Polyamin auf Basis von Triacetondiamin
und

B2) 60-80 Gew.-% mindestens eines weiteren Diamins und/oder Polyamins ausgewählt aus Isophorondiamin, 4,4'-Diaminodicyclohexylmethan, 2,4'-Diaminodicyclohexylmethan, 2,2'-Diaminodicyclohexylmethan, allein oder in Mischungen der Isomeren,
eine Mischung der Isomeren aus 2,2,4-Trimethylhexamethylendiamin und 2,4,4-Trimethylhexamethylendiamin, Adukthärtern auf Basis der Umsetzungsprodukte von Epoxidverbindungen und Di- und/oder Polyaminen B2) oder Kombinationen der vorgenannten Di- und/oder Polyamine B2),

wobei das stöchiometrische Verhältnis der Epoxid-Gruppen von A) und der Anzahl der aktiven Wasserstoffatome der funktionellen Gruppen von B) von 1:0,5 bis 1:1 variiert, bevorzugt 1:0,6 bis 1:0,8,

C) 0,1 bis 10 Gew.-% mindestens eines Härtungsbeschleunigers,

D) gegebenenfalls mindestens einen latenten Härter,
wobei sich die Mengen von A)-D) zu 100 Gew.-% addieren,

E) gegebenenfalls weitere Zusatzstoffe.

**Faser förmiger Träger**

Das bevorzugt erfindungsgemäß verwendete faserförmige Trägermaterial ist dadurch gekennzeichnet, dass die faserförmigen Träger größtenteils aus Glas, Kohlenstoff, Kunststoffen wie Polyamid (Aramid) oder Polyester, Naturfasern, oder mineralischen Fasermaterialien wie Basaltfasern oder keramische Fasern bestehen, einzeln oder aus Mischungen, oder aus mehreren Lagen verschiedener Fasertypen.
Die faserförmigen Träger liegen als textile Flächengebilde aus Vlies, Maschenware, Gewirke oder Gestricke, nicht maschige Gebinde wie Gewebe, Gelege oder Geflechte, als Langfaser- oder Kurzfasermaterialien vor, einzeln oder aus mehreren Lagen verschiedener Typen.
Im Detail liegt folgende Ausführung vor: Der faserförmige Träger in der vorliegenden Erfindung besteht aus faserförmigem Material (auch häufig Verstärkungsfasern genannt). Im Allgemeinen ist jegliches Material, aus dem die Fasern bestehen, geeignet, bevorzugt wird jedoch faserförmiges Material aus Glas, Kohlenstoff, Kunststoffen, wie z. B.

Polyamid (Aramid) oder Polyester, Naturfasern oder mineralischen Fasermaterialien wie Basaltfasern oder keramische Fasern (Oxidische Fasern auf Basis von Aluminiumoxiden und/oder Siliciumoxiden) verwendet. Auch Mischungen von Fasertypen, wie z.B. Gewebe-Kombinationen aus Aramid- und Glasfasern, oder Kohlenstoff und Glasfasern, können verwendet werden.

Glasfasern sind hauptsächlich wegen ihres relativ geringen Preises die am häufigsten verwendeten Fasertypen. Prinzipiell sind hier alle Arten von glasbasierenden Verstärkungsfasern geeignet (E-Glas-, S-Glas-, R-Glas-, M-Glas-, C-Glas-, ECR-Glas-, D-Glas-, AR-Glas-, oder Hohlglasfasern). Kohlenstofffasern kommen im Allgemeinen in Hochleistungsverbundstoffen zum Einsatz, wo auch die im Verhältnis zur Glasfaser niedrigere Dichte bei gleichzeitig hoher Festigkeit ein wichtiger Faktor ist. Kohlenstofffasern (auch Carbonfasern) sind industriell hergestellte Fasern aus kohlenstoffhaltigen Ausgangsmaterialien, die durch Pyrolyse in graphitartig angeordneten Kohlenstoff umgewandelt werden. Man unterscheidet isotrope und anisotrope Typen: isotrope Fasern besitzen nur geringe Festigkeiten und geringere technische Bedeutung, anisotrope Fasern zeigen hohe Festigkeiten und Steifigkeiten bei gleichzeitig geringer Bruchdehnung. Als Naturfasern werden hier alle Textilfasern und Faserwerkstoffe bezeichnet, die aus pflanzlichem und tierischem Material gewonnen werden (z.B. Holz-, Zellulose-, Baumwoll-, Hanf-, Jute-, Leinen-, Sisal-, Bambusfasern). Aramid-Fasern weisen, ähnlich wie auch Kohlenstofffasern, einen negativen Wärmeausdehnungskoeffizienten auf, werden also bei Erwärmung kürzer. Ihre spezifische Festigkeit und ihr Elastizitätsmodul sind deutlich niedriger als jene von Kohlenstofffasern. In Verbindung mit dem positiven Ausdehnungskoeffizienten des Matrixharzes lassen sich hoch maßhaltige Bauteile fertigen. Gegenüber Kohlenstofffaser verstärkten Kunststoffen ist die Druckfestigkeit von Aramidfaser- Verbundwerkstoffen deutlich geringer. Bekannte Markennamen für Aramidfasern sind Nomex® und Kevlar® von DuPont, oder Teijinconex®, Twaron® und Technora® von Teijin. Besonders geeignet und bevorzugt sind Träger aus Glasfasern, Kohlenstofffasern, Aramidfasern oder keramischen Fasern. Bei dem faserförmigen Material handelt es sich um ein textiles Flächengebilde. Geeignet sind textile Flächengebilde aus Vlies, ebenso sogenannte Maschenware, wie Gewirke und Gestricke, aber auch nicht maschige Gebinde wie Gewebe, Gelege oder Geflechte. Außerdem unterscheidet man Langfaser- und Kurzfasermaterialien als Träger. Ebenfalls erfindungsgemäß geeignet sind Rovings und Garne. Alle genannten Materialien sind im Rahmen der Erfindung als faserförmiger Träger geeignet. Einen Überblick über Verstärkungsfasern enthält "Composites Technologien", Paolo Ermanni (Version 4), Script zur Vorlesung ETH Zürich, August 2007, Kapitel 7.

Gegenstand der Erfindung ist auch ein Verfahren zur Herstellung von Composites durch die Verfahrensschritte:

I. Bereitstellung einer reaktiven Zusammensetzung enthaltend

A) mindestens eine Epoxidverbindung
und

B) eine Härterzusammensetzung bestehend aus:

B1) 20-40 Gew.-% mindestens einem Diamin und/oder Polyamin auf Basis von Triacetondiamin
und
B2) 60-80 Gew.-% mindestens eines weiteren Diamins und/oder Polyamins
ausgewählt aus
Isophorondiamin,
4,4'-Diaminodicyclohexylmethan, 2,4'-Diaminodicyclohexylmethan, 2,2'-Diaminodicyclohexylmethan, allein oder in Mischungen der Isomeren,
eine Mischung der Isomeren aus 2,2,4-Trimethylhexamethylendiamin und 2,4,4-Trimethylhexamethylendiamin,
Addukthärtern auf Basis der Umsetzungsprodukte von Epoxidverbindungen und Di- und/oder Polyaminen B2)
oder Kombinationen der vorgenannten Di- und/oder Polyamine B2),

wobei das stöchiometrische Verhältnis der Epoxid-Gruppen von A) und der Anzahl der aktiven Wasserstoffatome der funktionellen Gruppen von B) von 1:0,5 bis 1:1 variiert, bevorzugt 1:0,6 bis 1:0,8,

C) 0,1 bis 10 Gew.-% mindestens eines Härtungsbeschleunigers,

D) gegebenenfalls mindestens einen latenten Härter,
wobei sich die Mengen von A)-D) zu 100 Gew.-% addieren,

E) gegebenenfalls weitere Zusatzstoffe;

II. Imprägnierung eines faserförmigen Trägers mit der Zusammensetzung aus I. in einem geschlossenen Werkzeug;

III. Aushärtung der reaktiven Zusammensetzung zum Composite-Bauteil im geschlossenen Werkzeug; und

IV. entformen des fertigen Bauteils aus der Kavität.

Gegenstand der Erfindung ist insbesondere auch die Verwendung der erfindungsgemäß hergestellten Composites im Boots- und Schiffbau, in der Luft- und Raumfahrttechnik, im Automobilbau, für Zweiräder, bevorzugt Motorräder und Fahrräder, in den Bereichen Automotive, Construction, Medizintechnik, Sport, Elektro- und Elektronik-Industrie, Energieerzeugungsanlagen, wie z.B. für Rotorblätter von Windkraftanlagen.

Beispiele

Die in den folgenden Beispielen genutzten Einsatzstoffe sind in Tabelle 1 erklärt.

*Tabelle 1*.: Einsatzstoffe

| Handelsname | Lieferant | Chemische Bezeichnung | Abkürzung |
|---|---|---|---|
| Triacetondiamin | Evonik Industries | 2,2,6,6-Tetramethyl-4-amino-piperidin | TAD |
| Vestamin® IPD | Evonik Industries | 3-Aminomethyl-3,5,5-trimethylcyclohexylamin | IPD |
| Vestamin® TMD | Evonik Industries | Isomerengemisch aus 2,2,4-Trimethylhexamethylendiamin und 2,4,4-Trimethylhexamethylendiamin | TMD |
| Epikote® 828 | Hexion | Epoxidharz aus Bisphenol A und Epichlorhydrin | - |
| 2-Methylimidazol | Sigma Aldrich | 2-Methylimidazol | 2-MI |

Beschreibung der in den folgenden Beispielen benutzten Analyse-Verfahren:

**Viskosität, isotherm 120 °C**

Gerät: Anton-Paar MCR 301

Parameter: Kegel-Platte, 120 °C isotherm, Amplitude gamma = 2 %, Frequenz f = 1 Hz, Messpunktdauer: 5 s.

Bestimmung der Gelzeit: wenn Speichermodul = Verlustmodul (Verlustfaktor = 1)

**DSC**

Gerät: Mettler DSC 1

Parameter: Temperatur -30 bis +250 °C, Aufheizrate 10 K/ min

Bestimmung der Glasübergangstemperatur (Tg): Halbstufenmethode, Mittelpunkt DIN 51007

Bestimmung des Umsatzes:

$$100 - \left( \frac{exothermer\ Wärmestrom\ nach\ Härtung \times 100}{exothermer\ Wärmestrom\ vor\ Härtung} \right)$$

**Beispiel 1:**

In einem passenden Rührgefäß wurde ein Ansatz aus 37,5 g Vestamin IPD, 15 g Vestamin TMD, 22,5 g Triacetondiamin, 424 g Epikote 828 und 4,99 g 2-Methylimidazol zubereitet und in einem Speedmixer Modell DAC 600.1 VAC-P der Fa. Hauschild bei 1200-1800 U/min innig vermischt. Im Folgenden wurde der Viskositätsverlauf dieser Epoxidharz-Zusammensetzung bei 120 °C isotherm mit dem Rheometer MCR 301 der Firma Anton-Paar (Kegel/Platte-Geometrie) bestimmt. Weiterhin wurde ein Härtungsscreening durchgeführt. Dafür wurden 5 g der Epoxidharz-Zusammensetzung in ein Aluminiumpfännchen (Durchmesser 50 mm) eingewogen und die Probe 4 min im Umlufttrockenschrank bei 120 °C gehärtet. Anschließende wurden Umsatz und Tg per DSC (Maschine Mettler DSC 1) bestimmt. Die Aufheizrate betrug 10 K/min von - 30 bis 250 °C. Alle Ergebnisse sind in Tabelle 2 dargestellt.

**Beispiel 2** (nicht erfindungsgemäß)

In gleicher Weise wie bei Beispiel 1 wurde ein Ansatz aus 100g Triacetondiamin und 360 g Epikote 828 in einem passenden Rührgefäß zubereitet und in einem Speedmixer Modell DAC 600.1 VAC-P der Fa. Hauschild bei 1200-1800 U/min innig vermischt. Mit dieser Epoxidharz-Zusammensetzung wurden in gleicher Weise wie in Beispiel 1 Experimente zum Viskositätsverlauf sowie ein Härtungsscreening durchgeführt. Diese Formulierung besitzt zwar günstige rheologische Eigenschaften, zeigt aber eine viel zu lange Gelzeit und härtet unter den gewünschten Bedingungen nicht. Auch diese Ergebnisse sind in Tabelle 2 dargestellt.

*Tabelle 2:*

|  | **Beispiel 1** | **Beispiel 2 (nicht erfindungsgemäß)** |
|---|---|---|
| Viskosität @ 120 °C:<br>Zeit < 100 mPas<br>Zeit < 500 mPas<br>Gelzeit (min'sec"): | 60 s<br>75 s<br>2'25" | 215 s<br>400 s<br>26'25" |
| Härtungsscreening:<br>Umsatz nach 4 min 120 °C<br>Tg Reinharz | 99 %<br>129 °C | 33 %<br>- (nicht gehärtet) |
| Glasübergangstemperatur Laminat | 130 °C | nicht gehärtet |

**Beispiel 3**

In eine Kavität mit den Maßen 320 x 520 x 2 mm wurden 6 Lagen eines Cabon-Biaxial-geleges (304g/m$^2$, Fa. Saertex) eingelegt, so dass sich ein Faservolumengehalt des fertigen Bauteils von etwa 55 % ergab. Die Kavität wurde fest verschlossen und auf 120 °C aufgeheizt. Mit der 2-Komponenten-Anlage Nodopur VS2195 der Fa. Tartler wurden 165 ml der in Beispiel 1 beschriebenen Epoxidharz-Zusammensetzung innerhalb von 1 min bei einem Druck von 10 bar in das Werkzeug injiziert und nach Beendigung der Werkzeugfüllung 4 min bei 120 °C gehärtet. Das Werkzeug wurde nach Ablauf der Härtungszeit geöffnet und ein carbonfaserverstärktes Laminat entformt, welches einen Tg von 130 °C hatte (DSC). Alle Fasern waren vollständig imprägniert und das Laminat wies keine Poren und/oder Lunker auf.

**Beispiel 4** (nicht erfindungsgemäß)

In eine Kavität mit den Maßen 320 x 520 x 2 mm wurden 6 Lagen eines Cabon-Biaxial-geleges (304g/m$^2$, Fa. Saertex) eingelegt, so dass sich ein Faservolumengehalt des fertigen Bauteils von etwa 55 % ergab. Die Kavität wurde fest verschlossen und auf 120 °C aufgeheizt. Mit der 2-Komponenten-Anlage Nodopur VS2195 der Fa. Tartler wurden 165 ml der in Beispiel 2 beschriebenen Epoxidharz-Zusammensetzung innerhalb von 1 min bei einem Druck von 10 bar in das Werkzeug injiziert und nach Beendigung der Werkzeugfüllung 4 min bei 120 °C gehärtet. Das Werkzeug wurde nach Ablauf der Härtungszeit von 4 min geöffnet. Das Laminat konnte nicht entformt werden, da die Harzmatrix noch klebrig und nicht ausgehärtet war.

**Patentansprüche**

1.  Epoxidharz-Zusammensetzung enthaltend:

    A) mindestens eine Epoxidverbindung
    und
    B) eine Härterzusammensetzung bestehend aus:

    B1) 20-40 Gew.-% mindestens eines Diamins und/oder Polyamins auf Basis von Triacetondiamin
    und

B2) 60-80 Gew.-% mindestens eines weiteren Diamins und/oder Polyamins

ausgewählt aus

Isophorondiamin,

4,4'-Diaminodicyclohexylmethan, 2,4'-Diaminodicyclohexylmethan, 2,2'-Diaminodicyclohexylmethan, allein oder in Mischungen der Isomeren,

eine Mischung der Isomeren aus 2,2,4-Trimethylhexamethylendiamin und 2,4,4-Trimethylhexamethylendiamin,

Adukthärtern auf Basis der Umsetzungsprodukte von Epoxidverbindungen und Di- und/oder Polyaminen B2)

oder Kombinationen der vorgenannten Di- und/oder Polyamine B2),

wobei das stöchiometrische Verhältnis der Epoxid-Gruppen von A) und der Anzahl der aktiven Wasserstoffatome der funktionellen Gruppen von B) von 1:0,5 bis 1:1 variiert,

bevorzugt 1:0,6 bis 1:0,8,

C) 0,1 bis 10 Gew.-% mindestens eines Härtungsbeschleunigers,

D) gegebenenfalls mindestens einen latenten Härter,

wobei sich die Mengen von A)-D) zu 100 Gew.-% addieren,

E) gegebenenfalls weitere Zusatzstoffe.

2. Epoxidharz-Zusammensetzung nach Anspruch 1, **dadurch gekennzeichnet, dass** Epoxyverbindungen A) auswählt aus gesättigten, ungesättigten, aliphatischen, cycloaliphatischen, aromatischen oder heterocyclischen Epoxyverbindungen enthalten sind und diese auch Hydroxylgruppen aufweisen können.

3. Epoxidharz-Zusammensetzung nach mindestens einem der vorherigen Ansprüche, **dadurch gekennzeichnet, dass** Epoxyverbindungen A) ausgewählt aus-Glycidylethern, Glycidylestern, aliphatischen Epoxiden, Diglycidylethern auf Basis Bisphenol A und/oder Bisphenol F, Glycidylmethacrylaten, enthalten sind.

4. Epoxidharz-Zusammensetzung nach mindestens einem der vorherigen Ansprüche, **dadurch gekennzeichnet, dass** Epoxyverbindungen A) ausgewählt aus der Gruppe umfassend Epoxidharze auf Basis von Bisphenol A-diglycidylether, Epoxidharze auf Basis von Bisphenol F-diglycidylether, 4,4'-Methylen-bis[N,N-bis(2,3-epoxypropyl)anilin], Hexandioldiglycidylether, Butandioldiglycidylether, Trimethylolpropantriglycidylether, 1,2,3-Propantrioltriglycidylether, Pentaerythrit-tetraglycidylether, Hexahydrophthalsäurediglycidylester, aliphatische oder cycloaliphatische Epoxidharz-Typen enthalten sind.

5. Epoxidharz-Zusammensetzung nach mindestens einem der vorherigen Ansprüche, **dadurch gekennzeichnet, dass** Polyamine auf Basis von Triacetondiamin B1) ausgewählt aus 2,2,6,6-Tetramethyl-4-amino-piperidin, Hexamethylen-Bis-(4-Amino-2,2,6,6-tetramethylpiperidin), N-Butyl-4-Amino-2,2,6,6-tetramethylpiperidin, N,N-Dimethylaminopropyl-4-Amino-2,2,6,6-tetramethylpiperidin, N-Propyl-4-Amino-2,2,6,6-tetramethylpiperidin, N-Isopropyl-4-Amino-2,2,6,6-tetramethylpiperidin, N-Hydroxyethyl-4-Amino-2,2,6,6-tetramethylpiperidin, N-Methoxyethyl-4-Amino-2,2,6,6-tetramethylpiperidin, N-Methoxyethyl-4-Amino-2,2,6,6-tetramethylpiperidin, N',N'-Dimethylaminoethyl-4-Amino-2,2,6,6-tetramethylpiperidin, N-Morpholinoethyl-4-Amino-2,2,6,6-tetramethylpiperidin, N-Piperazinoethyl-4-Amino-2,2,6,6-tetramethylpiperidin, 4-Morpholino-2,2,6,6-tetramethylpiperidin, enthalten sind.

6. Epoxidharz-Zusammensetzung nach mindestens einem der vorherigen Ansprüche, **dadurch gekennzeichnet, dass**

als Komponente B2)

a) Isophorondiamin,

b) und/oder eine Kombination aus Isophorondiamin und einer Mischung der Isomeren aus 2,2,4-Trimethylhexamethylendiamin und 2,4,4-Trimethylhexamethylendiamin, und/oder 4,4'-Diaminodicyclohexylmethan, 2,4'-Diaminodicyclohexylmethan, 2,2'-Diaminodicyclohexylmethan, allein oder in Mischungen der Isomeren,

c) und/oder Adukthärter auf Basis der Umsetzungsprodukte von Epoxidverbindungen und den vorgenannten Aminen B2) oder Kombination von vorgenannten Aminen B2), eingesetzt wird.

7. Epoxidharz-Zusammensetzung nach mindestens einem der vorherigen Ansprüche, **dadurch gekennzeichnet, dass** als Härtungsbeschleuniger C) Imidazol und/oder Imidazol-Derivate enthalten sind.

8. Epoxidharz-Zusammensetzung nach mindestens einem der vorherigen Ansprüche, **dadurch gekennzeichnet,**

**dass** latente Härter D), ausgewählt aus Dicyandiamid, Cyanoguanidin, aromatischen Aminen, Guanidinen, modifizierten Polyaminen, N-Acylimidazolen, Imidazolen, Carbonsäurehydraziden, Triazinderivaten, Melamin und dessen Derivaten, N-Cyanacylamid-Verbindungen und Acylthiopropylphenolen, enthalten sind.

9. Verwendung einer Epoxidharz-Zusammensetzung nach mindestens einem der vorherigen Ansprüche zur Herstellung von Composites.

10. Composite-Bauteile,
im Wesentlichen aufgebaut aus

1) mindestens einem Faser förmigen Träger
und
2) einer Epoxidharz-Zusammensetzung nach mindestens einem der vorherigen Ansprüche 1 bis 8.

11. Verfahren zur Herstellung von Composites nach Anspruch 10 durch die Verfahrensschritte:

I. Bereitstellung einer Zusammensetzung nach Anspruch 1;
II. Imprägnierung eines faserförmigen Trägers mit der Zusammensetzung aus I. in einem geschlossenen Werkzeug,
III. Aushärtung der reaktiven Zusammensetzung zum Composite-Bauteil im geschlossenen Werkzeug
und
IV. Entformen des fertigen Bauteils aus der Kavität.

12. Verwendung der Composites nach Anspruch 10 im Boots- und Schiffbau, in der Luft- und Raumfahrttechnik, im Automobilbau, für Zweiräder, bevorzugt Motorräder und Fahrräder, in den Bereichen Automotive, Construction, Medizintechnik, Sport, Elektro- und Elektronik-Industrie, Energieerzeugungsanlagen.

**Claims**

1. Epoxy resin composition comprising:

A) at least one epoxy compound
and
B) a hardener composition consisting of:

B1) 20%-40% by weight of at least one diamine and/or polyamine based on triacetonediamine
and
B2) 60%-80% by weight of at least one further diamine and/or polyamine
selected from
isophoronediamine,
4,4'-diaminodicyclohexylmethane, 2,4'-diaminodicyclohexylmethane, 2,2'-diaminodicyclohexylmethane, alone or in mixtures of the isomers,
a mixture of the isomers of 2,2,4-trimethylhexamethylenediamine and 2,4,4-trimethylhexamethylenediamine,
adduct hardeners based on the reaction products of epoxy compounds and di- and/or polyamines B2) or combinations of the aforementioned di- and/or polyamines B2)

wherein the stoichiometric ratio of the epoxy groups of A) and the number of active hydrogen atoms of the functional groups of B) varies from 1:0.5 to 1:1, preferably 1:0.6 to 1:0.8,
C) 0.1% to 10% by weight of at least one curing accelerator,
D) optionally at least one latent hardener, wherein the amounts of A)-D) add up to 100% by weight,
E) optionally further additives.

2. Epoxy resin composition according to Claim 1, **characterized in that** epoxy compounds A) selected from saturated, unsaturated, aliphatic, cycloaliphatic, aromatic or heterocyclic epoxy compounds are present, and these may also have hydroxyl groups.

3. Epoxy resin composition according to at least one of the preceding claims, **characterized in that** epoxy compounds A) selected from glycidyl ethers, glycidyl esters, aliphatic epoxides, diglycidyl ethers based on bisphenol A and/or bisphenol F, glycidyl methacrylates are present.

4. Epoxy resin composition according to at least one of the preceding claims, **characterized in that**, epoxy compounds A) selected from the group comprising epoxy resins based on bisphenol A diglycidyl ether, epoxy resins based on bisphenol F diglycidyl ether, 4,4'-methylenebis[N,N-bis(2,3-epoxypropyl)aniline], hexanediol diglycidyl ether, butanediol diglycidyl ether, trimethylolpropane triglycidyl ether, propane-1,2,3-triol triglycidyl ether, pentaerythritol tetraglycidyl ether, diglycidyl hexahydrophthalate, aliphatic or cycloaliphatic epoxy resin types are present.

5. Epoxy resin composition according to at least one of the preceding claims, **characterized in that** polyamines based on triacetonediamine B1) selected from 2,2,6,6-tetramethyl-4-aminopiperidine, hexamethylenebis(4-amino-2,2,6,6-tetramethylpiperidine), N-butyl-4-amino-2,2,6,6-tetramethylpiperidine, N,N-dimethylaminopropyl-4-amino-2,2,6,6-tetramethylpiperidine, N-propyl-4-amino-2,2,6,6-tetramethylpiperidine, N-isopropyl-4-amino-2,2,6,6-tetramethylpiperidine, N-hydroxyethyl-4-amino-2,2,6,6-tetramethylpiperidine, N-methoxyethyl-4-amino-2,2,6,6-tetramethylpiperidine, N-methoxyethyl-4-amino-2,2,6,6-tetramethylpiperidine, N',N'-dimethylaminoethyl-4-amino-2,2,6,6-tetramethylpiperidine, N-morpholinoethyl-4-amino-2,2,6,6-tetramethylpiperidine, N-piperazinoethyl-4-amino-2,2,6,6-tetramethylpiperidine, 4-morpholino-2,2,6,6-tetramethylpiperidine are present.

6. Epoxy resin composition according to at least one of the preceding claims, **characterized in that**

   a) isophoronediamine,
   b) and/or a combination of isophoronediamine and a mixture of the isomers of 2,2,4-trimethylhexamethylenediamine and 2,4,4-trimethylhexamethylenediamine, and/or 4,4'-diaminodicyclohexylmethane, 2,4'-diaminodicyclohexylmethane, 2,2'-diaminodicyclohexylmethane, alone or in mixtures of the isomers,
   c) and/or adduct hardeners based on the reaction products of epoxy compounds and the aforementioned amines B2) or combination of the aforementioned amines B2),

   are used as component B2).

7. Epoxy resin composition according to at least one of the preceding claims, **characterized in that** imidazole and/or imidazole derivatives are present as curing accelerators C).

8. Epoxy resin composition according to at least one of the preceding claims, **characterized in that** latent hardeners D) selected from dicyandiamide, cyanoguanidine, aromatic amines, guanidines, modified polyamines, N-acylimidazoles, imidazoles, carbonyl hydrazides, triazine derivatives, melamine and derivatives thereof, N-cyanoacylamide compounds and acylthiopropylphenols are present.

9. Use of an epoxy resin composition according to at least one of the preceding claims for production of composites.

10. Composite components essentially constructed from

    1) at least one fibrous carrier
    and
    2) an epoxy resin composition according to at least one of the preceding Claims 1 to 8.

11. Method of producing composites according to Claim 10 by the method steps of:

    I. providing a composition according to Claim 1;
    II. impregnating a fibrous carrier with the composition from I. in a closed mould;
    III. curing the reactive composition to afford the composite component in the closed mould;
    and
    IV. demoulding the finished component from the cavity.

12. Use of the composites according to Claim 10 in boat- and shipbuilding, in aerospace technology, in automobile construction, for two-wheeled vehicles, preferably motorcycles and pedal cycles, in the automotive, construction, medical technology and sports sectors, the electrical and electronics industry, energy generation installations.

**Revendications**

1.  Composition de résine époxyde, contenant :

    A) au moins un composé d'époxyde
    et
    B) une composition de durcisseur, constituée par :

    B1) 20 à 40 % en poids d'au moins une diamine et/ou polyamine à base de triacétone-diamine,
    et
    B2) 60 à 80 % en poids d'au moins une autre diamine et/ou polyamine, choisie parmi :

    l'isophorone-diamine,
    le 4,4'-diaminodicyclohexylméthane, le 2,4'-diaminodicyclohexylméthane, le 2,2'-diaminodicyclohexylméthane, seuls ou en mélanges des isomères,
    un mélange des isomères de 2,2,4-triméthylhexaméthylène-diamine et de 2,4,4-triméthylhexaméthylène-diamine,
    les durcisseurs adduits à base des produits de réaction de composés d'époxyde et de di- et/ou polyamines B2),
    ou les combinaisons des di- et/ou polyamines B2) susmentionnées,

    le rapport stoechiométrique entre les groupes époxyde de A) et le nombre d'atomes d'hydrogène actifs des groupes fonctionnels de B) variant de 1:0,5 à 1:1, de préférence de 1:0,6 à 1:0,8,

    C) 0,1 à 10 % en poids d'au moins un accélérateur de durcissement,
    D) éventuellement au moins un durcisseur latent, la somme des quantités de A) à D) étant de 100 % en poids,
    E) éventuellement d'autres additifs.

2.  Composition de résine époxyde selon la revendication 1, **caractérisée en ce que** des composés époxy A) choisis parmi les composés époxy saturés, insaturés, aliphatiques, cycloaliphatiques, aromatiques ou hétérocycliques sont contenus, et ceux-ci peuvent également comprendre des groupes hydroxyle.

3.  Composition de résine époxyde selon au moins l'une quelconque des revendications précédentes, **caractérisée en ce que** des composés époxy A) choisis parmi les éthers de glycidyle, les esters de glycidyle, les époxydes aliphatiques, les éthers diglycidyliques à base de bisphénol A et/ou de bisphénol F, les méthacrylates de glycidyle, sont contenus.

4.  Composition de résine époxyde selon au moins l'une quelconque des revendications précédentes, **caractérisée en ce que** des composés époxy A) choisis dans le groupe comprenant les résines époxydes à base d'éther diglycidylique de bisphénol A, les résines époxydes à base d'éther diglycidylique de bisphénol F, la 4,4'-méthylène-bis[N,N-bis(2,3-époxypropyl)aniline], l'éther diglycidylique d'hexanediol, l'éther diglycidylique de butanediol, l'éther triglycidylique de triméthylolpropane, l'éther triglycidylique de 1,2,3-propanetriol, l'éther tétraglycidylique de pentaérythrite, l'ester diglycidylique de l'acide hexahydrophtalique, les résines époxydes de type aliphatique ou cycloaliphatique, sont contenus.

5.  Composition de résine époxyde selon au moins l'une quelconque des revendications précédentes, **caractérisée en ce que** des polyamines à base de triacétone-diamine B1) choisies parmi la 2,2,6,6-tétraméthyl-4-amino-pipéridine, l'hexaméthylène-bis-(4-amino-2,2,6,6-tétraméthylpipéridine), la N-butyl-4-amino-2,2,6,6-tétraméthylpipéridine, la N,N-diméthylaminopropyl-4-amino-2,2,6,6-tétraméthylpipéridine, la N-propyl-4-amino-2,2,6,6-tétraméthylpipéridine, la N-isopropyl-4-amino-2,2,6,6-tétraméthylpipéridine, la N-hydroxyéthyl-4-amino-2,2,6,6-tétraméthylpipéridine, la N-méthoxyéthyl-4-amino-2,2,6,6-tétraméthylpipéridine, la N-méthoxyéthyl-4-amino-2,2,6,6-tétraméthylpipéridine,
    la N',N'-diméthylaminoéthyl-4-amino-2,2,6,6-tétraméthylpipéridine, la N-morpholinoéthyl-4-amino-2,2,6,6-tétraméthylpipéridine, la N-pipérazinoéthyl-4-amino-2,2,6,6-tétraméthylpipéridine, la 4-morpholino-2,2,6,6-tétraméthylpipéridine, sont contenues.

6.  Composition de résine époxyde selon au moins l'une quelconque des revendications précédentes, **caractérisée en ce que**

en tant que composant B2)

a) de l'isophorone-diamine,
b) et/ou une combinaison d'isophorone-diamine et d'un mélange des isomères de 2,2,4-triméthylhexaméthylène-diamine et de 2,4,4-triméthylhexaméthyléne-diamine, et/ou de 4,4'-diaminodicyclohexylméthane, de 2,4'-diaminodicyclohexylméthane, de 2,2'-diaminodicyclohexylméthane, seuls ou en mélanges des isomères,
c) et/ou des durcisseurs adduits à base des produits de réaction de composés d'époxyde et des amines B2) susmentionnées ou une combinaison des amines B2) susmentionnées,

sont utilisés.

7. Composition de résine époxyde selon au moins l'une quelconque des revendications précédentes, **caractérisée en ce que** de l'imidazole et/ou des dérivés d'imidazole sont contenus en tant qu'accélérateur de durcissement C).

8. Composition de résine époxyde selon au moins l'une quelconque des revendications précédentes, **caractérisée en ce que** des durcisseurs latents D), choisis parmi le dicyandiamide, la cyanoguanidine, les amines aromatiques, les guanidines, les polyamines modifiées, les N-acylimidazoles, les imidazoles, les hydrazides d'acides carboxyliques, les dérivés de triazine, la mélamine et ses dérivés, les composés de N-cyanacylamide et les acylthiopropylphénols, sont contenus.

9. Utilisation d'une composition de résine époxyde selon au moins l'une quelconque des revendications précédentes pour la fabrication de composites.

10. Composants composites, essentiellement formés par :

1) au moins un support fibreux
et
2) une composition de résine époxyde selon au moins l'une quelconque des revendications 1 à 8 précédentes.

11. Procédé de fabrication de composites selon la revendication 10 par les étapes de procédé suivantes :

I. la préparation d'une composition selon la revendication 1 ;
II. l'imprégnation d'un support fibreux avec la composition de I. dans un moule fermé,
III. le durcissement de la composition réactive pour former le composant composite dans le moule fermé,
et
IV. le démoulage du composant fini de la cavité.

12. Utilisation des composites selon la revendication 10 dans la construction de bateaux et de navires, dans la technologie aéronautique et astronautique, dans la construction d'automobiles, pour les deux-roues, de préférence les motos et les vélos, dans les domaines de l'automobile, du bâtiment, de la technologie médicale, du sport, de l'industrie électrique et électronique, des installations de génération d'énergie.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2005111135 A1
- DE 2640408
- DE 2640409
- DE 2540410
- DE 2950067
- DE 3328134
- EP 675185 A
- EP 394495 A1
- US 4775733 A1
- WO 2007096425 A2
- US 4859761 A
- EP 306451 A
- US 4436892 A
- US 4587311 A
- JP PS743212 A
- US 3678007 A
- US 3677978 A
- US 3030247 A
- US 4283520 A
- US 4529821 A
- US 4550203 A
- US 4618712 A
- US 4694096 A
- US 3386955 A
- WO 9955772 A
- EP 669353 A

**In der Beschreibung aufgeführte Nicht-Patentliteratur**

- **A. M. PAQUIN.** Epoxidverbindungen und Epoxid-harze. Springer Verlag, 1958
- **LEE NEVILLE.** Handbook of Epoxy Resins. 1967
- *Epoxy Resins - Chemistry and Technology; Curing Agents and Modifiers,* 02. August 1988, 481-482
- **H. LEE ; K. NEVILLE.** Handbook of Epoxy Resins. McGraw-Hill, 1967
- **R. GÄCHTER ; H. MÜLLER.** Plastics Additives. Hanser Publishers, 1983
- **PAOLO ERMANNI.** Composites Technologien. Script zur Vorlesung ETH Zürich, August 2007